# FASCICULE DE BREVET EUROPEEN

(11) **EP 0 710 037 B1**
(45) Date de publication et mention de la délivrance du brevet: **22.12.1999**
(21) Numéro de dépôt: 95410121.8
(22) Date de dépôt: 24.10.1995
(51) Int. Cl.: H04N 9/64, H04N 11/18

(54) **Détecteur de norme de télévision couleur à faible seuil de réception**
Farbfernsehstandarddetektor mit niedriger Empfangsschwelle
Colour television system detector with a low reception threshold

(30) Priorité: 31.10.1994 FR 9413406
(43) Date de publication de la demande: 01.05.1996
(73) Titulaire: STMicroelectronics S.A., 94250 Gentilly (FR)
(72) Inventeur: Maldonado, Pierre-Jean, F-38180 Seyssins (FR)
(74) Mandataire: de Beaumont, Michel

(56) Documents cités:
- EP-A- 0 063 961
- EP-A- 0 245 038
- EP-A- 0 482 768
- EP-A- 0 594 512
- GB-A- 2 258 970
- ELEKTRONIK, vol. 37, no. 7, 30 Mars 1988 MUNCHEN DE, pages 56-66, LIGERTWOOD P. 'ANALOG-TV-CHIP DIGITAL GESTEUERT, Chroma-4"-Konzept macht Abgleich überflüssig'
- IEEE TRANSACTIONS ON CONSUMER ELECTRONICS, vol. 37, no. 3, 30 Août 1991 NEW YORK US, pages 197-202, XP 000263185 IMBERT M. ET AL 'A FULL INTEGRATED AUTOMATIC MULTISTANDARD CHROMA DECODER'

## Description

La présente invention concerne un dispositif d'identification de la norme de codage des signaux reçus par un récepteur de signaux de télévision couleur. Elle s'applique plus particulièrement à la réalisation d'un tel circuit au sein d'un circuit intégré de réception multistandard.

Un circuit de réception de signaux de télévision d'un récepteur multistandard comporte classiquement un dispositif d'identification automatique de la norme selon laquelle est codé le signal de télévision couleur et en particulier l'information de chrominance. Cette information de chrominance est extraite du signal reçu au moyen d'un filtre passe-bande permettant d'éliminer l'information de luminance du signal.

L'information de chrominance d'un signal de télévision couleur comporte deux paramètres, communément désignés B-Y et R-Y, qui une fois démodulés permettent au récepteur de retrouver la proportion des trois couleurs de base du signal, à savoir rouge, vert, bleu. Les deux paramètres B-Y et R-Y sont transmis en alternance, c'est-à-dire une ligne sur deux.

On distingue trois normes selon lesquelles peut être codé le signal de télévision couleur. Ces normes sont la norme SECAM, la norme PAL et la norme NTSC, et elles se distinguent par la manière dont sont modulées les informations devant être transmises.

Pour la norme SECAM, le signal est transmis en modulation de fréquence et d'amplitude. L'amplitude de la modulation contient l'information de luminance de la ligne considérée tandis que la fréquence de la modulation contient l'information de chrominance. La modulation de fréquence s'effectue en alternance, c'est-à-dire que la porteuse est différente pour les lignes B-Y et pour les lignes R-Y. Les fréquences des porteuses sont généralement respectivement 4,25 MHz et 4,406 MHz pour les signaux B-Y et R-Y. Les plages de modulation en fréquence respectives sont -350 à + 500 kHz pour le B-Y et -500 à + 350 kHz pour le R-Y.

Pour les normes PAL et NTSC, il s'agit d'une modulation quadratique en phase et en amplitude. L'amplitude de la modulation contient comme précédemment l'information de luminance, mais l'information de chrominance de la ligne considérée est fournie par la phase et l'amplitude de la modulation. La fréquence de la porteuse est généralement soit 4,43 MHz, soit 3,58 MHz.

La distinction entre les normes PAL et NTSC est que pour la norme PAL, le paramètre R-Y est transmis avec une alternance de phase de plus ou moins quatre-vingt- dix degrés.

L'identification de la norme passe par l'emploi de filtres passe-bande présentant un facteur de surtension d'environ trois pour les normes PAL et NTSC et d'un filtre cloche présentant un facteur de surtension d'environ seize pour la norme SECAM. Les signaux de sorties de ces filtres permettent à la fois d'effectuer la "remise à l'heure" du récepteur, c'est-à-dire la synchronisation par rapport au type de ligne B-Y ou R-Y, et de déterminer la norme selon laquelle est codée l'information de chrominance.

La figure 1 représente schématiquement les différents éléments du récepteur qui sont utilisés pour identifier la norme du signal de télévision couleur. Sur cette figure, seuls les éléments indispensables à la compréhension du problème ont été représentés.

Les figures 2A à 2D illustrent schématiquement la structure des signaux du circuit de la figure 1.

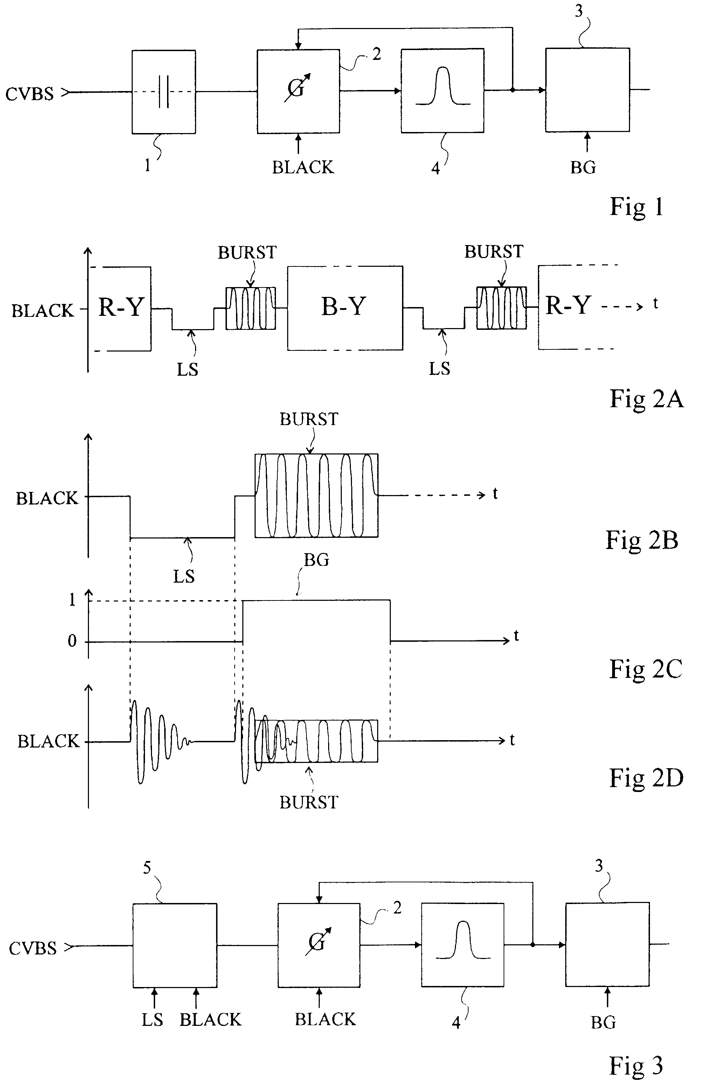

Le signal vidéo composite en bande de base CVBS (figure 2A), ici selon la norme SECAM, est envoyé à un amplificateur à gain contrôlé 2 par l'intermédiaire d'un dispositif d'élimination de composante continue, tel qu'un condensateur de liaison. L'amplificateur 2 permet d'augmenter le niveau du signal reçu à un niveau normalisé pour en autoriser le décodage.

Le signal CVBS comporte successivement un top de synchronisation ligne LS, un signal de référence SALVE et une ligne, alternativement B-Y et R-Y. Le top de synchronisation LS et le signal de référence SALVE sont transmis pendant chaque retour ligne.

L'identification de la norme au sein d'un récepteur multistandard s'effectue classiquement pendant la réception du signal de référence, communément appelé salve de référence, c'est-à-dire à chaque retour ligne (figure 2B). Cette salve de référence, précédée du top de synchronisation ligne LS, est centrée sur un palier correspondant à un niveau BLACK d'absence de données de chrominance du paramètre considéré. En d'autres termes, la salve de référence SALVE s'inscrit dans un palier correspondant au niveau du "noir" du paramètre B-Y ou R-Y.

Pendant la salve de référence, le signal de chrominance correspond selon la norme SECAM, à la fréquence pure de la porteuse de la ligne considérée. Il correspond à une phase de 180° selon la norme NTSC, et à une phase de 135° ou de 225° en fonction de la ligne considérée selon la norme PAL. L'amplitude du signal pendant une salve de référence est normalisée, c'est-à-dire qu'elle est d'environ 300 mV crête à crête.

L'identification de la norme s'effectue soit sur la totalité de cette salve (PAL ou NTSC) soit pendant une partie de cette salve de référence (SECAM). La plage temporelle pendant laquelle s'effectue l'identification de la norme est communément appelée un portier BG, ou "Burst Gate" dans son appellation anglo-saxonne (figure 2C). L'identification s'effectue dans un bloc d'identification 3 commandé par le portier BG.

L'amplificateur 2 est associé à des filtres 4 d'extraction de l'information chrominance présente dans le signal. Les signaux de sortie de l'amplificateur 2 correspondent aux signaux d'entrée des filtres de chrominance 4 (passe-bande et cloche) affectés aux différentes normes. La sortie des filtres 4 fournit un signal d'amplitude normalisée (environ 300 mV crête à crête) centré sur le niveau de référence BLACK qui correspond au niveau d'absence de données de chrominance du paramètre considéré. Pour des raisons de clarté, seuls un bloc d'identification 3 et un filtre 4 ont été représentés à la figure 1.

Un inconvénient des circuits classiques est qu'ils imposent de fixer un seuil de détection élevé pour éviter l'apparition d'erreurs d'identification de la norme pour des signaux de faible niveau. En effet, en cas de réception d'un signal CVBS de faible niveau, toutes ses composantes alternatives se trouvent amplifiées par l'amplificateur à gain contrôlé 2. Or, les fronts des tops de synchronisation LS se trouvent transformés par le filtre de chrominance 4 en des oscillations amorties du deuxième ordre (figure 2D). L'amplification du front arrière du top LS détériore le rapport signal/bruit de la salve de référence dans la mesure où le début du portier BG est très proche (environ 0,9 µs) de ce front arrière. La figure 2D illustre ce phénomène où l'amplification du front arrière du top de synchronisation LS produit une oscillation non négligeable qui se superpose au début de la salve de référence.

Pour éviter l'apparition d'erreurs d'identification de la norme, on est contraint dans les circuits classiques à fixer un seuil minimal de niveau de réception en deçà duquel il est impossible de détecter correctement la norme selon laquelle est codée l'information de chrominance du signal. Ce seuil est généralement fixé à une valeur comprise entre 20 et 30 mV. En effet, faute de prévoir ce seuil, les oscillations du front arrière des tops de synchronisation qui sont amplifiées risquent de ne pas être éliminées par les filtres passe-bande et cloche 4 dans la mesure ou le spectre haute fréquence lié à ces tops est présent dans la bande des filtres 4. L'amplification des fronts des tops de synchronisation empêchera donc une identification correcte de la norme.

L'invention vise à remédier à cet inconvénient en permettant l'identification sûre de la norme selon laquelle est codé le signal de télévision et en particulier l'information de chrominance du signal en abaissant le seuil minimal de détection.

Pour atteindre cet objet, la présente invention prévoit un circuit d'identification de la norme d'un signal de télévision couleur du type comportant un amplificateur à gain contrôlé normalisant l'amplitude des oscillations du signal vidéo composite en bande de base pendant une salve de référence centrée sur un niveau de référence, ladite salve étant destinée à être exploitée par des filtres passe-bande d'identification de la norme et étant précédée par un top de synchronisation ligne, le circuit comportant en amont dudit amplificateur un dispositif d'élimination des tops de synchronisation ligne.

Selon un mode de réalisation de l'invention, ledit dispositif d'élimination des tops de synchronisation ligne comporte un interrupteur de superposition dudit niveau de référence au signal vidéo composite à l'apparition d'un top de synchronisation.

Selon un mode de réalisation de l'invention, ledit dispositif comporte un premier transistor bipolaire de type NPN dont la base constitue une première entrée recevant le signal vidéo composite, dont le collecteur est connecté à une tension d'alimentation et dont l'émetteur est connecté à la masse par l'intermédiaire d'un premier générateur de courant de polarisation, la sortie du dispositif étant constituée par l'émetteur dudit premier transistor qui est également relié à la sortie dudit interrupteur.

Selon un mode de réalisation de l'invention, ledit interrupteur est constitué d'un deuxième transistor bipolaire de type NPN qui reçoit sur sa base ledit niveau de référence et dont l'émetteur est relié à l'émetteur du premier transistor, le collecteur dudit deuxième transistor étant relié à la tension d'alimentation.

Selon un mode de réalisation de l'invention, une diode est intercalée entre l'émetteur dudit deuxième transistor et la sortie du dispositif.

Selon un mode de réalisation de l'invention, la commande dudit interrupteur est effectuée au moyen d'un troisième transistor bipolaire de type NPN dont la base constitue une deuxième entrée du dispositif, dont l'émetteur est connecté à la masse et dont le collecteur est relié à la base du deuxième transistor et, par l'intermédiaire d'un second générateur de courant de polarisation, à la tension d'alimentation.

Selon un mode de réalisation de l'invention, ledit niveau de référence est envoyé sur la base du deuxième transistor par l'intermédiaire d'un quatrième transistor bipolaire de type PNP dont la base constitue une troisième entrée du dispositif et dont le collecteur est connecté à la masse, l'émetteur dudit quatrième transistor étant relié à la base du deuxième transistor.

Selon un mode de réalisation de l'invention, le circuit est réalisé sous la forme d'un circuit intégrant au moins, ledit dispositif, ledit amplificateur et lesdits filtres.

Ces objets, caractéristiques et avantages, ainsi que d'autres de la présente invention seront exposés en détail dans la description suivante d'un mode de réalisation particulier faite à titre non limitatif en relation avec les figures jointes parmi lesquelles :
les figures 1 et 2A à 2D qui ont été décrites précédemment sont destinées à exposer l'état de la technique et le problème posé ;
la figure 3 représente un mode de réalisation d'un circuit d'identification de la norme de télévision couleur selon l'invention ;

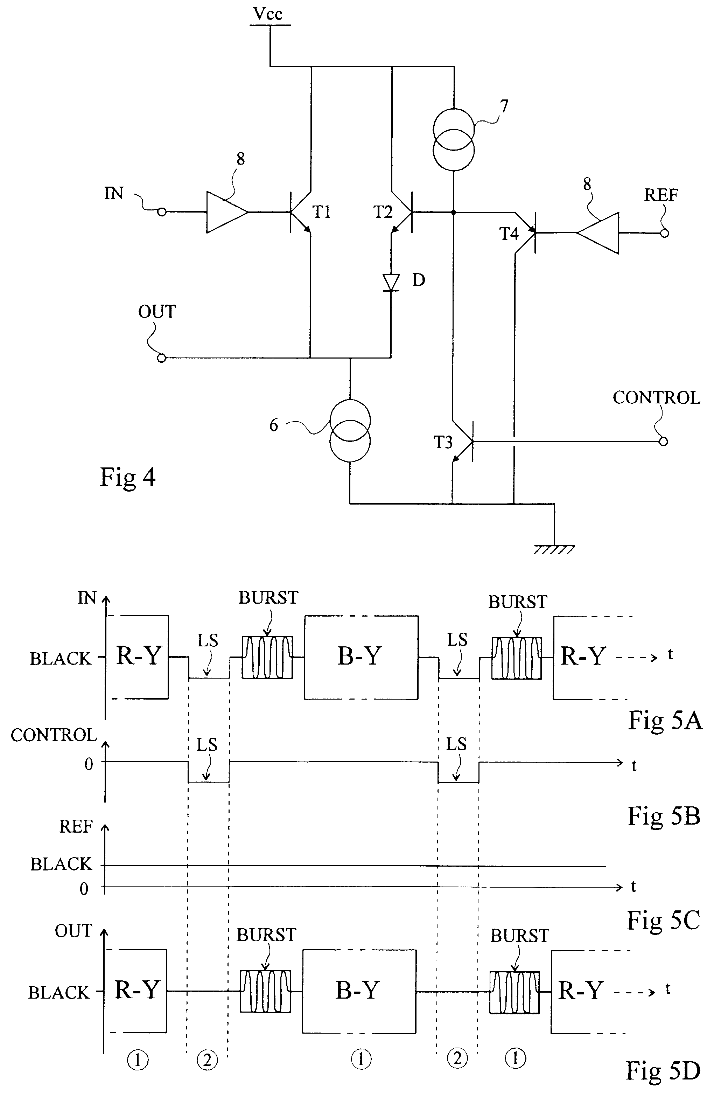

la figure 4 représente un mode de réalisation d'un dispositif d'élimination du top de synchronisation du circuit selon l'invention ; et
les figures 5A à 5D illustrent la forme des signaux du dispositif représenté à la figure 4.

Pour des raisons de clarté, les chronogrammes des figures 2A à 2D et 5A à 5D ne sont pas à l'échelle et les mêmes éléments ont été désignés aux différentes figures par les mêmes références.

Comme le montre la figure 3, l'invention prévoit d'intercaler entre l'entrée du signal vidéo en bande de base CVBS et l'amplificateur à gain contrôlé 2, un dispositif 5 d'élimination du top de synchronisation ligne LS.

Ainsi, le signal en bande de base n'est plus envoyé par l'intermédiaire d'un dispositif éliminant la composante continue, tel qu'un condensateur de liaison. Le signal CVBS est transformé par le dispositif 5 qui permet de reproduire les oscillations du signal centrées sur le niveau BLACK d'absence d'information de chrominance en éliminant les tops de synchronisation.

Par la suite, le signal est comme précédemment amplifié par un amplificateur à gain contrôlé 2, puis est envoyé sur l'entrée des filtres passe-bande et cloche classiques 4 d'identification de la norme selon laquelle est codé le signal de télévision couleur.

La figure 4 illustre un mode de réalisation du dispositif 5 d'élimination du top de synchronisation ligne selon l'invention.

Ce dispositif reçoit sur une première borne d'entrée IN, le signal en bande de base CVBS tel que représenté à la figure 2A. Ce signal est envoyé sur la base d'un transistor bipolaire T1 de type NPN dont le collecteur est connecté à une tension d'alimentation Vcc et dont l'émetteur constitue la borne de sortie OUT du dispositif envoyée à l'amplificateur 2. Un premier générateur de courant de polarisation 6 est relié entre l'émetteur du transistor T1 et la masse.

L'émetteur du transistor T1 reçoit une composante continue délivrée par l'émetteur d'un transistor bipolaire T2 de type NPN. Ce transistor bipolaire T2 dont le collecteur est connecté à la tension d'alimentation Vcc, joue le rôle d'un interrupteur de superposition d'une tension de référence au signal composite.

Cet interrupteur est commandé par les tops de synchronisation au moyen d'un transistor bipolaire T3 de type NPN. L'émetteur du transistor T3 est connecté à la masse. Le collecteur du transistor T3 est relié à la base du transistor T2 ainsi que par l'intermédiaire d'un second générateur de courant de polarisation 7, à la tension d'alimentation Vcc. La base du transistor T3 qui constitue une deuxième borne d'entrée CONTROL, de commande du dispositif selon l'invention, reçoit un signal ne comportant que les tops de synchronisation ligne. Ce signal est disponible dans un circuit classique dans la mesure où il sert notamment à la synchronisation du balayage du téléviseur et qu'il est pour ce faire, extrait par ailleurs du signal vidéo composite.

La tension de référence, qui est superposée au signal composite sous la commande des tops de synchronisation, est délivrée sur la base du transistor T2 par l'émetteur d'un transistor bipolaire T4 de type PNP. Ce transistor T4 reçoit sur sa base le niveau BLACK correspondant à l'absence d'information de chrominance. La base du transistor T4 constitue une troisième borne d'entrée REF du dispositif selon l'invention et son collecteur est connecté à la masse. Le niveau de référence BLACK qui représente le palier dans lequel s'inscrit la salve de référence est également disponible dans un circuit récepteur classique. Il s'agit notamment du niveau servant à l'amplificateur à gain contrôlé 2 (voir figure 1).

Pour permettre une compensation sur le niveau de référence BLACK, de la chute de tension base-émetteur Vbe apportée par le transistor T1 sur le niveau du signal CVBS, une diode D est intercalée entre l'émetteur du transistor T2 et la borne de sortie OUT du dispositif. La chute de tension base-émetteur apportée par le transistor T2 sur le niveau de référence BLACK est quant à elle compensée par la chute de tension base-émetteur du transistor T4.

De préférence, les première et troisième entrées du dispositif sur lesquelles sont envoyés des niveaux devant être exploités par la suite par l'amplificateur 2, sont pourvues de dispositifs suiveurs 8. Les générateurs de courant de polarisation 6 et 7 sont constitués par exemple à base de transistors ou de résistances.

Les figures 5A à 5D illustrent sous forme de chronogrammes le fonctionnement du dispositif représenté à la figure 4.

Le signal (figure 5A) envoyé sur l'entrée IN du dispositif correspond au signal vidéo composite en bande de base CVBS tel que représenté à la figure 2A.

L'entrée CONTROL du dispositif reçoit un signal (figure 5B) comportant uniquement les tops de synchronisation LS.

L'entrée REF reçoit le niveau de tension de référence BLACK (figure 5C) qui correspond au niveau de tension du palier dans lequel s'inscrit la salve de référence SALVE du signal composite CVBS.

La figure 5D illustre la forme du signal délivré en sortie du dispositif selon l'invention.

Entre deux tops de synchronisation, le transistor T3 conduit et le transistor T2 est donc bloqué. Aucune composante continue n'est donc ajoutée au signal CVBS pendant les périodes ① séparant deux tops de synchronisation LS.

A l'apparition d'un top de synchronisation et pendant toute la durée ② de celui-ci, le transistor T3 est bloqué. Le transistor T2 est ainsi conducteur. Il reproduit sur son émetteur, le niveau de tension BLACK présent sur l'entrée REF du dispositif. Les chutes de tension base-émetteur Vbe des transistors T2 et T4 se compensent et la diode D abaisse le niveau BLACK d'une tension de jonction Vbe compensant ainsi la chute de tension Vbe apportée par le transistor T1 sur le niveau du signal CVBS.

Comme il ressort de la figure 5D, les oscillations du signal envoyé sur l'amplificateur à gain contrôlé 2 correspondent désormais pendant les périodes de retour ligne, uniquement aux oscillations de la salve de référence.

L'invention met à profit l'existence au sein du circuit récepteur, de signaux reproduisant les tops de synchronisation ligne et le niveau de référence du palier dans lequel s'inscrit la salve de référence, pour éliminer les tops de synchronisation du signal vidéo composite en les remplaçant par le niveau de référence. Ainsi, le signal qui est amplifié par l'amplificateur à gain contrôlé 2 ne comporte plus d'oscillations dues à l'amortissement du front arrière du top de synchronisation transmis par un condensateur de liaison. La salve de référence ne risque donc plus d'être polluée par ces oscillations.

Les oscillations présentes durant la salve de référence constituent désormais uniquement le signal utile des filtres d'identification de la norme. Ces oscillations peuvent donc être amplifiées, même fortement, sans altérer le rapport signal/bruit.

En pratique et selon les composants utilisés, un très faible pic, lié à la commutation du transistor T2 peut apparaître aux fronts des tops de synchronisation. Mais ce pic n'étant plus lié au passage d'un créneau dans un condensateur de liaison, il a quasiment disparu au moment où commence le portier BG d'extraction de la salve de référence.

Le seuil de détection d'un circuit selon l'invention peut être ramené à une valeur de l'ordre de 5 à 10 mV, voire inférieure.

De plus, l'invention se prête particulièrement bien à une réalisation sous forme de circuit intégré et participe ainsi à l'intégration globale des constituants d'un détecteur de norme d'un signal de télévision couleur.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction. En outre, le dimensionnement des différents composants et notamment des générateurs de courant de polarisation est à la portée de l'homme du métier.

## Revendications

1. Circuit d'identification de la norme d'un signal de télévision couleur du type comportant un amplificateur à gain contrôlé (2) normalisant l'amplitude des oscillations du signal vidéo composite en bande de base (CVBS) pendant une salve de référence (SALVE) centrée sur un niveau de référence (BLACK), ladite salve étant destinée à être exploitée par des filtres passe-bande (4) d'identification de la norme et étant précédée par un top de synchronisation ligne (LS), caractérisé en ce qu'il comporte en amont dudit amplificateur (2) un dispositif (5) d'élimination des tops de synchronisation ligne (LS).

2. Circuit d'identification de la norme d'un signal de télévision couleur selon la revendication 1, caractérisé en ce que ledit dispositif (5) d'élimination des tops de synchronisation ligne (LS) comporte un interrupteur de superposition dudit niveau de référence (BLACK) au signal vidéo composite (CVBS) à l'apparition d'un top de synchronisation.

3. Circuit d'identification de la norme d'un signal de télévision couleur selon la revendication 2, caractérisé en ce que ledit dispositif (5) comporte un premier transistor bipolaire (T1) de type NPN dont la base constitue une première entrée (IN) recevant le signal vidéo composite (CVBS), dont le collecteur est connecté à une tension d'alimentation (Vcc) et dont l'émetteur est connecté à la masse par l'intermédiaire d'un premier générateur de courant de polarisation (6), la sortie (OUT) du dispositif étant constituée par l'émetteur dudit premier transistor qui est également relié à la sortie dudit interrupteur.

4. Circuit d'identification de la norme d'un signal de télévision couleur selon la revendication 3, caractérisé en ce que ledit interrupteur est constitué d'un deuxième transistor bipolaire (T2) de type NPN qui reçoit sur sa base ledit niveau de référence (BLACK) et dont l'émetteur est relié à l'émetteur du premier transistor (T1), le collecteur dudit deuxième transistor étant relié à la tension d'alimentation (Vcc).

5. Circuit d'identification de la norme d'un signal de télévision couleur selon la revendication 4, caractérisé en ce qu'une diode (D) est intercalée entre l'émetteur dudit deuxième transistor (T2) et la sortie (OUT) du dispositif.

6. Circuit d'identification de la norme d'un signal de télévision couleur selon la revendication 4 ou 5, caractérisé en ce que la commande dudit interrupteur est effectuée au moyen d'un troisième transistor bipolaire (T3) de type NPN dont la base constitue une deuxième entrée (CONTROL) du dispositif (5), dont l'émetteur est connecté à la masse et dont le collecteur est relié à la base du deuxième transistor (T2) et, par l'intermédiaire d'un second générateur de courant de polarisation (7), à la tension d'alimentation (Vcc).

7. Circuit d'identification de la norme d'un signal de télévision couleur selon l'une quelconque des revendications 4 à 6, caractérisé en ce que ledit niveau de référence (BLACK) est envoyé sur la base du deuxième transistor (T2) par l'intermédiaire d'un quatrième transistor bipolaire (T4) de type PNP dont la base constitue une troisième entrée (REF) du dispositif (5) et dont le collecteur est connecté à la masse, l'émetteur dudit quatrième transistor (T4) étant relié à la base du deuxième transistor (T2).

8. Circuit d'identification de la norme d'un signal de télévision couleur selon l'une quelconque des revendications 1 à 7, caractérisé en ce qu'il est réalisé sous la forme d'un circuit intégrant au moins, ledit dispositif (5), ledit amplificateur (2) et lesdits filtres (4).

## Patentansprüche

1. Schaltung zur Identifizierung der Norm bzw. des Standards eines Farbfernsehsignals, vom Typ mit einem Verstärker mit steuerbarer Verstärkung (2) zur Standardisierung bzw. Normalisierung der Amplitude der Schwingungen des zusammengesetzten Basisband-Fernsehsignals (CVBS) während einem auf einem Bezugspegel (BLACK) zentrierten Bezugs-BURST-Impulses bzw.-impulsbündels (SALVE), wobei die genannte BURST-Salve zur Verwendung durch Bandpaßfilter (4) für die Identifizierung der Norm bzw. des Standards vorgesehen ist und ihr ein Zeilensynchronisierimpuls (LS) vorausgeht,
**dadurch gekennzeichnet** daß
die Schaltung stromaufwärts des genannten Verstärkers (2) eine Vorrichtung (5) zur Eliminierung der Zeilensynchronimpulse (LS) aufweist.

2. Schaltung zur Identifizierung der Norm bzw. des Standards eines Farbfernsehsignals, nach Anspruch 1, dadurch gekennzeichnet, daß die genannte Vorrichtung (5) zur Eliminierung der Zeilensynchronsignale (LS) einen Schalter zur Überlagerung des genannten Bezugspegels (BLACK) über das zusammengesetzte Videosignal (CVBS) beim Auftreten eines Synchronisierimpulses aufweist.

3. Schaltung zur Identifizierung der Norm bzw. des Standards eines Farbfernsehsignals, nach Anspruch 2, dadurch gekennzeichnet, daß die genannte Vorrichtung (5) einen ersten Bipolar-Transistor (T1) vom NPN-Typ aufweist, dessen Basis einen ersten Eingang (IN) für das zusammengesetzte Videosignal (CVBS) bildet, dessen Kollektor mit einer Speisespannung (Vcc) und dessen Emitter über einen ersten Vorspannstrom-Generator (6) mit Masse verbunden sind, und daß der Ausgang (OUT) der Vorrichtung durch den Emitter des genannten ersten Transistors gebildet wird, der auch mit dem Ausgang des genannten Schalters verbunden ist.

4. Schaltung zur Identifizierung der Norm bzw. des Standards eines Farbfernsehsignals, nach Anspruch 3, dadurch gekennzeichnet, daß der genannte Schalter von einem zweiten Bipolar-Transistor (T2) vom NPN-Typ gebildet wird, der an seiner Basis den genannten Bezugspegel (BLACK) zugeführt erhält und dessen Emitter mit dem Emitter des ersten Transistors (T1) verbunden ist, wobei der Kollektor des zweiten Transistors mit der Speisespannnung (Vcc) verbunden ist.

5. Schaltung zur Identifizierung der Norm bzw. des Standards eines Farbfernsehsignals, nach Anspruch 4, dadurch gekennzeichnet, daß zwischen dem Emitter des genannten zweiten Transistors (T2) und dem Ausgang (OUT) der Vorrichtung eine Diode (D) zwischengeschaltet ist.

6. Schaltung zur Identifizierung der Norm bzw. des Standards eines Farbfernsehsignals, nach den Ansprüchen 4 oder 5, dadurch gekennzeichnet, daß die Steuerung des genannten Schalters mittels eines dritten Bipolar-Transistors (T3) vom NPN-Typ erfolgt, dessen Basis einen zweiten Eingang (CONTROL) der Vorrichtung bildet, dessen Emitter mit Masse verbunden ist, und dessen Kollektor mit der Basis des zweiten Transistors (T2) sowie über einen zweiten Vorspannstrom-Generator (7) mit der Speisespannung (Vcc) verbunden ist.

7. Schaltung zur Identifizierung der Norm bzw. des Standards eines Farbfernsehsignals, nach einem der Ansprüche 4 bis 6, dadurch gekennzeichnet, daß der genannte Bezugspegel (BLACK) der Basis des zweiten Transistors (T2) über einen vierten Bipolar-Transistor (T4) vom PNP-Typ zugeführt wird, dessen Basis einen dritten Eingang (REF) der Vorrichtung (5) bildet und dessen Kollektor mit Masse verbunden ist, wobei der Emitter des genannten vierten Transistors (T4) mit der Basis des zweiten Transistors (T2) verbunden ist.

8. Schaltung zur Identifizierung der Norm bzw. das Standards eines Frabfernsehsignals, nach einem der Ansprüche 1 bis 7, dadurch gekennzeichnet, daß die Schaltung in Form einer Schaltung realisiert ist, welche wenigstens die genannte Vorrichtung (5), den genannnten Verstärker (2) und die genannten Filter (4) integriert.

## Claims

1. A circuit for identifying the standard of a color television signal of the type including a gain-controlled amplifier (2) standardizing the amplitude of the oscillations of the composite video baseband signal (CVBS) during a reference burst (BURST) centered on a reference level (BLACK), said burst being utilized by band-pass filters (4) for identifying the standard and being preceded by a line synchronization pulse (LS), characterized in that it includes upstream of said amplifier (2) a device (5) for eliminating the line synchronization pulses (LS).

2. A circuit for identifying the standard of a color television signal according to claim 1, characterized in that said device (5) for eliminating the line synchronization pulses (LS) includes a switch for superimposing said reference level (BLACK) with the composite video signal (CVBS) upon arrival of a synchronization pulse.

3. A circuit for identifying the standard of a color television signal according to claim 2, characterized in that said device (5) includes a first NPN-type bipolar transistor (T1), the base of which constitutes a first input (IN) receiving the composite video signal (CVBS), the collector of which is connected to a supply voltage (Vcc) and the emitter of which is grounded through a first generator of biasing current (6), the output (OUT) of the device being constituted by the emitter of said switch which is also connected to the output of said switch.

4. A circuit for identifying the standard of a color television signal according to claim 3, characterized in that said switch is constituted by a second NPN-type bipolar transistor (T2) which receives on its base said reference level (BLACK), and the emitter of which is connected to the emitter of the first transistor (T1), the collector of said second transistor being connected to the supply voltage (Vcc).

5. A circuit for identifying the standard of a color television signal according to claim 4, characterized in that a diode (D) is interposed between the emitter of said second transistor (T2) and the output (OUT) of the device.

6. A circuit for identifying the standard of a color television signal according to claim 4 or 5, characterized in that the control of said switch is performed by means of a third NPN-type bipolar transistor (T3), the base of which constitutes a second input (CONTROL) of the device (5), the emitter of which is grounded and the collector of which is connected to the base of the second transistor (T2) and, through a second generator of biasing current (7), to the supply voltage (Vcc).

7. A circuit for identifying the standard of a color television signal according to any of claims 4 to 6, characterized in that said reference level (BLACK) is sent on the base of the second transistor (T2) through a fourth PNP-type bipolar transistor (T4), the base of which constitutes a third input (REF) of the device (5), and the collector of which is grounded, the emitter of said fourth transistor (T4) being connected to the base of the second transistor (T2).

8. A circuit for identifying the standard of a color television signal according to any of claims 1 to 7, characterized in that it is implemented in a circuit integrating, at least, said device (5), said amplifier (2) and said filters (4).
